# EUROPEAN PATENT APPLICATION

(11) **EP 4 761 435 A1**
(43) Date of publication of application: **17.06.2026**
(21) Application number: 24850683.4
(22) Date of filing: 21.06.2024
(51) Int. Cl.: H04W 72/25

(54) **INFORMATION ACQUISITION METHOD, INFORMATION TRANSMISSION METHOD, APPARATUS, TERMINAL, AND NETWORK DEVICE**

(30) Priority: 10.08.2023 CN 202311006175
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2024/100607
(87) International publication number: WO 2025/031031

(57) **Abstract**

This disclosure provides an information acquisition method, an information transmission method, an apparatus, a terminal, and a network device, and relates to the field of communication technology. The method is performed by a first terminal, and includes: obtaining target indication information, wherein the target indication information is used for indicating whether to use sidelink interface carrier aggregation and/or for indicating a sidelink interface carrier aggregation transmission mode.

## Description

### CROSS-REFERENCE TO RELATED APPLICATION

This application claims priority to Chinese Patent Application No. 202311006175.9, filed on August 10, 2023, and entitled "information acquisition method, information transmission method, apparatus, terminal, and network device", disclosure of which is incorporated herein by reference in its entirety.

### TECHNICAL FIELD

This disclosure relates to the field of communication technology, and in particular to an information acquisition method, an information transmission method, an apparatus, a terminal and a network device.

### BACKGROUND

To improve the peak rate of the sidelink (SL) interface, a carrier aggregation (CA) mechanism has been introduced for the SL interface. In 5th Generation (5G) New Radio (NR) Rel-18 and earlier versions, terminals only supported one sidelink interface carrier. However, in later versions, to meet the demands for high peak rate of services, it is necessary to introduce multiple carriers in the sidelink interface. This leads to the following problem: different terminals performing SL communication may support different protocol versions. For example, a transmitting terminal might support SL CA, but its corresponding receiving terminal might not support SL CA. Therefore, it is necessary to consider how to assist the terminal or the network device serving the terminal in determining, when allocating sidelink interface resources for the terminal, whether to use carrier aggregation and/or whether to allow the transmission of data of a single bearer through multiple carriers.

### SUMMARY

Embodiments of this disclosure provide an information acquisition method, an information transmission method, an apparatus, a terminal, and a network device that can assist a terminal or a network device serving a terminal in determining whether to use carrier aggregation and/or whether to allow the transmission of data of a single bearer through multiple carriers when allocating sidelink interface resources for the terminal.

To address the aforementioned technical problem, an embodiment of this disclosure provides an information acquisition method, performed by a first terminal, the method including:
obtaining target indication information, wherein the target indication information is used for indicating whether to use sidelink interface carrier aggregation and/or for indicating a sidelink interface carrier aggregation transmission mode.

In some embodiments, the obtaining the target indication information includes:
receiving transmission configuration information from a higher layer of the first terminal, the transmission configuration information carrying first indication information, the first indication information being the target indication information; or
receiving terminal capability information from a second terminal, the terminal capability information carrying second indication information, the second indication information being the target indication information;
wherein the first indication information includes at least one of the following:
   whether the first terminal uses sidelink interface carrier aggregation when performing data transmission corresponding to a first target object; or
   a sidelink interface carrier aggregation transmission mode used by the first terminal when performing data transmission corresponding to the first target object;
   the second indication information includes at least one of the following:
      whether a terminal capability of a second terminal supports sidelink interface carrier aggregation; or
      a sidelink interface carrier aggregation transmission mode supported by the terminal capability of the second terminal;
      wherein the second terminal is a sidelink peer of the first terminal, and the first target object includes: a Layer 2 address (L2 ID) or a service identifier or a QoS profile.

In some embodiments, whether sidelink interface carrier aggregation is supported or whether sidelink interface carrier aggregation is used is indicated by at least one of the following:
1 bit; or
a band combination.

In some embodiments, in a case that the first indication information includes the sidelink interface carrier aggregation transmission mode used by the first terminal when performing data transmission corresponding to the first target object, the sidelink interface carrier aggregation transmission mode includes at least one of the following:
data corresponding to one first target object are transmitted on only one target resource; or
data corresponding to one first target object are allowed to be transmitted on multiple target resources;
wherein the target resource includes: a carrier or a bandwidth part.

In some embodiments, in a case that the sidelink interface carrier aggregation transmission mode includes that data corresponding to one first target object are transmitted on only one target resource, the first indication information further includes: the target resource corresponding to the first target object.

In some embodiments, in a case that the second indication information includes the sidelink interface carrier aggregation transmission mode supported by the terminal capability of the second terminal, the sidelink interface carrier aggregation transmission mode includes at least one of the following:
data corresponding to one second target object are transmitted on only one target resource; or
data corresponding to one second target object are allowed to be transmitted on multiple target resources;
wherein the second target object includes: a sidelink interface logical channel, an L2 ID, a QoS profile, or a service identifier; the target resource includes: a carrier or a bandwidth part.

In some embodiments, in a case that the sidelink interface carrier aggregation transmission mode includes that data corresponding to one second target object are transmitted on only one target resource, the second indication information further includes: the target resource corresponding to the second target object.

In some embodiments, the method further includes:
sending third indication information to a network device, the third indication information including at least one of the following:
a sidelink interface target L2 ID;
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object; or
terminal capability information of a second terminal.

In some embodiments, the method further includes:
performing sidelink interface resource selection based on the transmission configuration information or the terminal capability information.

In some embodiments, in a case that the target indication information indicates that the first terminal does not use sidelink interface carrier aggregation when performing data transmission corresponding to the first target object, the target indication information is also used for indicating a target resource used by sidelink interface control information and/or sidelink interface data corresponding to the first target object;
wherein the target resource includes: a carrier or a bandwidth part.

An embodiment of this disclosure further provides an information acquisition method, performed by a network device, the method including:
receiving third indication information sent by a first terminal, wherein the third indication information includes at least one of the following:
a sidelink interface target Layer 2 address (L2 ID);
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object, wherein the first target object includes: a Layer 2 address (L2 ID) or a service identifier or a QoS profile; or
terminal capability information of a second terminal, wherein the second terminal is a sidelink peer of the first terminal.

In some embodiments, whether sidelink interface carrier aggregation is used is indicated by at least one of the following:
1 bit; or
a band combination.

In some embodiments, the sidelink interface carrier aggregation transmission mode includes at least one of the following:
data corresponding to one first target object are transmitted on only one target resource; or
data corresponding to one first target object are allowed to be transmitted on multiple target resources;
wherein the target resource includes: a carrier or a bandwidth part.

In some embodiments, the method further includes:
selecting a sidelink interface resource for the first terminal based on the third indication information.

An embodiment of this disclosure further provides an information transmission method, performed by a second terminal, the method including:
sending terminal capability information to a first terminal, wherein the terminal capability information carries second indication information;
the second indication information includes at least one of the following:
   whether a terminal capability of the second terminal supports sidelink interface carrier aggregation; or
   a sidelink interface carrier aggregation transmission mode supported by the terminal capability of the second terminal;
   wherein the second terminal is a sidelink peer of the first terminal.

In some embodiments, whether sidelink interface carrier aggregation is supported or whether sidelink interface carrier aggregation is used is indicated by at least one of the following:
1 bit; or
a band combination.

In some embodiments, in a case that the second indication information includes the sidelink interface carrier aggregation transmission mode supported by the terminal capability of the second terminal, the sidelink interface carrier aggregation transmission mode includes at least one of the following:
data corresponding to one second target object are transmitted on only one target resource; or
data corresponding to one second target object are allowed to be transmitted on multiple target resources;
wherein the second target object includes: a sidelink interface logical channel, an L2 ID, a QoS profile, or a service identifier; the target resource includes: a carrier or a bandwidth part.

In some embodiments, in a case that the sidelink interface carrier aggregation transmission mode includes that data corresponding to one second target object are transmitted on only one target resource, the second indication information further includes: the target resource corresponding to the second target object.

An embodiment of this disclosure further provides a terminal, the terminal is a first terminal, and includes a memory, a transceiver, and a processor;
wherein the memory is used for storing a computer program; the transceiver is used for sending and receiving data under the control of the processor; and the processor is used for reading the computer program from the memory and performing the following step:
obtaining target indication information, wherein the target indication information is used for indicating whether to use sidelink interface carrier aggregation and/or for indicating a sidelink interface carrier aggregation transmission mode.

In some embodiments, the processor is used for read a computer program from the memory and perform the following step:
receiving transmission configuration information from a higher layer of the first terminal, the transmission configuration information carrying first indication information, the first indication information being the target indication information; or
receiving terminal capability information from a second terminal, the terminal capability information carrying second indication information, the second indication information being the target indication information;
wherein the first indication information includes at least one of the following:
   whether the first terminal uses sidelink interface carrier aggregation when performing data transmission corresponding to a first target object; or
   a sidelink interface carrier aggregation transmission mode used by the first terminal when performing data transmission corresponding to the first target object;
   the second indication information includes at least one of the following:
      whether a terminal capability of a second terminal supports sidelink interface carrier aggregation; or
      a sidelink interface carrier aggregation transmission mode supported by the terminal capability of the second terminal;
      wherein the second terminal is a sidelink peer of the first terminal, and the first target object includes: a Layer 2 address (L2 ID) or a service identifier or a QoS profile.

In some embodiments, whether sidelink interface carrier aggregation is supported or whether sidelink interface carrier aggregation is used is indicated by at least one of the following:
1 bit; or
a band combination.

In some embodiments, in a case that the first indication information includes the sidelink interface carrier aggregation transmission mode used by the first terminal when performing data transmission corresponding to the first target object, the sidelink interface carrier aggregation transmission mode includes at least one of the following:
data corresponding to one first target object are transmitted on only one target resource; or
data corresponding to one first target object are allowed to be transmitted on multiple target resources;
wherein the target resource includes: a carrier or a bandwidth part.

In some embodiments, in a case that the sidelink interface carrier aggregation transmission mode includes that data corresponding to one first target object are transmitted on only one target resource, the first indication information further includes: the target resource corresponding to the first target object.

In some embodiments, in a case that the second indication information includes the sidelink interface carrier aggregation transmission mode supported by the terminal capability of the second terminal, the sidelink interface carrier aggregation transmission mode includes at least one of the following:
data corresponding to one second target object are transmitted on only one target resource; or
data corresponding to one second target object are allowed to be transmitted on multiple target resources;
wherein the second target object includes: a sidelink interface logical channel, an L2 ID, a QoS profile, or a service identifier; the target resource includes: a carrier or a bandwidth part.

In some embodiments, in a case that the sidelink interface carrier aggregation transmission mode includes that data corresponding to one second target object are transmitted on only one target resource, the second indication information further includes: the target resource corresponding to the second target object.

In some embodiments, the processor is used for reading the computer program from the memory and further performing the following step:
sending third indication information to a network device via the transceiver, the third indication information including at least one of the following:
a sidelink interface target L2 ID;
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object; or
terminal capability information of a second terminal.

In some embodiments, the processor is used for reading the computer program from the memory and further performing the following step:
performing sidelink interface resource selection based on the transmission configuration information or the terminal capability information.

In some embodiments, in a case that the target indication information indicates that the first terminal does not use sidelink interface carrier aggregation when performing data transmission corresponding to the first target object, the target indication information is also used for indicating a target resource used by sidelink interface control information and/or sidelink interface data corresponding to the first target object;
wherein the target resource includes: a carrier or a bandwidth part.

An embodiment of this disclosure further provides a network device, including a memory, a transceiver, and a processor;
wherein the memory is used for storing a computer program; the transceiver is used for sending and receiving data under the control of the processor; and the processor is used for reading the computer program from the memory and performing the following step:
receiving, via the transceiver, third indication information sent by a first terminal, the third indication information including at least one of the following:
a sidelink interface target Layer 2 address (L2 ID);
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object, wherein the first target object includes: a Layer 2 address (L2 ID) or a service identifier or a QoS profile; or
terminal capability information of a second terminal, wherein the second terminal is a sidelink peer of the first terminal.

In some embodiments, whether sidelink interface carrier aggregation is used is indicated by at least one of the following:
1 bit; or
a band combination.

In some embodiments, the sidelink interface carrier aggregation transmission mode includes at least one of the following:
data corresponding to one first target object are transmitted on only one target resource; or
data corresponding to one first target object are allowed to be transmitted on multiple target resources;
wherein the target resource includes: a carrier or a bandwidth part.

In some embodiments, the processor is used for reading the computer program from the memory and further performing the following step:
selecting a sidelink interface resource for the first terminal based on the third indication information.

An embodiment of this disclosure further provides a terminal, the terminal is a second terminal, and includes a memory, a transceiver, and a processor;
wherein the memory is used for storing a computer program; the transceiver is used for sending and receiving data under the control of the processor; and the processor is used for reading the computer program from the memory and performing the following step:
sending, via the transceiver, terminal capability information to a first terminal, and the terminal capability information carries second indication information;
the second indication information includes at least one of the following:
   whether a terminal capability of the second terminal supports sidelink interface carrier aggregation; or
   a sidelink interface carrier aggregation transmission mode supported by the terminal capability of the second terminal;
   wherein the second terminal is a sidelink peer of the first terminal.

In some embodiments, whether sidelink interface carrier aggregation is supported or whether sidelink interface carrier aggregation is used is indicated by at least one of the following:
1 bit; or
a band combination.

In some embodiments, in a case that the second indication information includes the sidelink interface carrier aggregation transmission mode supported by the terminal capability of the second terminal, the sidelink interface carrier aggregation transmission mode includes at least one of the following:
data corresponding to one second target object are transmitted on only one target resource; or
data corresponding to one second target object are allowed to be transmitted on multiple target resources;
wherein the second target object includes: a sidelink interface logical channel, an L2 ID, a QoS profile, or a service identifier; the target resource includes: a carrier or a bandwidth part.

In some embodiments, in a case that the sidelink interface carrier aggregation transmission mode includes that data corresponding to one second target object are transmitted on only one target resource, the second indication information further includes: the target resource corresponding to the second target object.

An embodiment of this disclosure further provides an information acquisition apparatus applied to a first terminal, including:
an obtaining unit, configured to obtain target indication information, wherein the target indication information is used for indicating whether to use sidelink interface carrier aggregation and/or for indicating a sidelink interface carrier aggregation transmission mode.

An embodiment of this disclosure further provides an information acquisition apparatus applied to a network device, including:
a receiving unit, configured to receive third indication information sent by a first terminal, wherein the third indication information includes at least one of the following:
a sidelink interface target Layer 2 address (L2 ID);
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object, wherein the first target object includes: a Layer 2 address (L2 ID) or a service identifier or a QoS profile; or
terminal capability information of a second terminal, wherein the second terminal is a sidelink peer of the first terminal.

An embodiment of this disclosure further provides an information transmission apparatus applied to a second terminal, including:
a first sending unit, configured to send terminal capability information to a first terminal, wherein the terminal capability information carries second indication information;
the second indication information includes at least one of the following:
   whether a terminal capability of the second terminal supports sidelink interface carrier aggregation; or
   a sidelink interface carrier aggregation transmission mode supported by the terminal capability of the second terminal;
   wherein the second terminal is a sidelink peer of the first terminal.

An embodiment of this disclosure further provides a processor-readable storage medium storing a computer program, wherein the computer program is used for causing a processor to perform the methods described above.

This disclosure has the following beneficial effects.

The above solution, by obtaining information related to sidelink interface carrier aggregation, can assist the terminal or the network device serving the terminal in determining whether to use carrier aggregation and/or whether to allow the transmission of data of a single bearer through multiple carriers when allocating sidelink interface resources for the terminal.

### BRIEF DESCRIPTION OF THE DRAWINGS

To more clearly illustrate the technical solutions in the embodiments of this disclosure or related technologies, the accompanying drawings used in the description of the embodiments or related technologies will be briefly introduced below. Obviously, the accompanying drawings described below are only some embodiments set forth in this disclosure. For those skilled in the art, other drawings can be obtained based on these drawings without creative effort.
Fig. 1 shows a structural diagram of a network system to which embodiments of this disclosure are applicable;
Fig. 2 shows a flowchart of an information acquisition method according to an embodiment of the present disclosure;
Fig. 3 shows a flowchart of an application scenario 1;
Fig. 4 shows a flowchart of an application scenario 2;
Fig. 5 shows a flowchart of an application scenario 3;
Fig. 6 shows a flowchart of an application scenario 4;
Fig. 7 shows another flowchart of an information acquisition method according to an embodiment of this disclosure;
Fig. 8 shows a modular diagram of an information acquisition apparatus according to an embodiment of the present disclosure;
Fig. 9 shows a structural diagram of a terminal according to an embodiment of this disclosure;
Fig. 10 shows another modular diagram of an information acquisition apparatus according to an embodiment of the present disclosure;
Fig. 11 shows a structural diagram of a network device according to an embodiment of the present disclosure;
Fig. 12 shows a flowchart of an information transmission method according to an embodiment of the present disclosure;
Fig. 13 shows a modular diagram of an information transmission apparatus according to an embodiment of the present disclosure.

### DETAILED DESCRIPTION

The technical solution of the embodiments of this disclosure will be clearly and completely described below with reference to the accompanying drawings. Obviously, the described embodiments are only some, not all, of the embodiments of this disclosure. Based on the embodiments of this disclosure, all other embodiments obtained by those skilled in the art without creative effort are within the scope of this disclosure.

The terms "first", "second" and the like used in the specification and claims of this disclosure are used to distinguish similar objects and are not necessarily used to describe a particular order or sequence. It should be understood that such use of data can be interchanged where appropriate so that embodiments of this disclosure described herein may be implemented, for example, in sequences other than those illustrated or described herein. Furthermore, the terms "including" and "having" and any variations thereof are intended to cover a non-exclusive inclusion; for example, a process, method, system, product, or apparatus that includes a series of steps or units is not necessarily limited to those steps or units explicitly listed, but may include other steps or units not explicitly listed or inherent to such processes, methods, products, or apparatus.

The term "and/or" used in the embodiments of this disclosure describes the relationship between related objects, indicating that three relationships can exist. For example, A and/or B can represent: A existing alone, A and B existing simultaneously, or B existing alone. The character "/" generally indicates that the preceding and following related objects have an "or" relationship. In this disclosure, the term "multiple" refers to two or more objects, and other quantifiers are similar.

In this disclosure, the term "exemplary" or "for example" are used for indicating that something is an example, illustration, or description. Any embodiment or implementation described as "exemplary" or "for example" in this disclosure should not be construed as being more preferred or advantageous than other embodiments or implementations. Specifically, the use of term such as "exemplary" or "for example" is intended to present the relevant concepts in a specific manner.

The following is a brief explanation of the relevant concepts mentioned in this disclosure.

Traditional wireless communication uses cellular network communication, where terminals and network devices transmit uplink and downlink data/control information through the Uu interface.

Direct communication refers to a method in which terminals close to each other can perform data transmission to each other within a short distance via a sidelink (also known as PC5 link, abbreviated as SL). The wireless interface corresponding to sidelink is called the sidelink interface (also known as PC5 interface).

Different terminals engaging in SL communication may support different protocol versions. For example, a sending terminal may support SL CA, while its corresponding receiving terminal may or may not support SL CA. Even if both sending and receiving terminals support SL CA, the supported SL CA modes may differ. Therefore, it is necessary to consider how to assist the terminal or the network device serving the terminal in determining whether to use carrier aggregation and/or whether to allow the transmission of data of a single bearer through multiple carriers when allocating sidelink interface resources for the terminal.

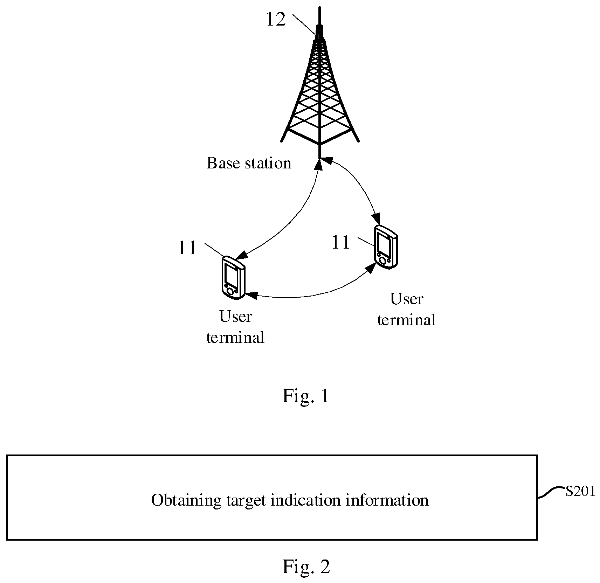

Referring to Fig. 1, which is a structural diagram of a network system to which embodiments of this disclosure are applicable, the network system includes a user terminal 11 and a base station 12. The user terminal 11 can be user equipment (UE), such as a mobile phone, tablet personal computer, laptop computer, personal digital assistant (PDA), mobile Internet device (MID), or wearable device. It should be noted that the specific type of user terminal 11 is not limited in the embodiments of this disclosure. The base station 12 can be a base station of 5th Generation (5G) or later version (e.g., the next generation Node B (gNB), 5G New Radio Node B (NR Node B)), or a base station in other communication systems or a gateway station supporting satellite communication, also referred to as Node B. It should be noted that the embodiments of this disclosure only use a 5G base station as an example, but the specific type of base station 12 is not limited.

The embodiments of this disclosure are described below with reference to the accompanying drawings. The information acquisition method, information transmission method, apparatus, terminal, and network device provided in the embodiments of this disclosure can be applied in a wireless communication system. The wireless communication system can be a system employing fifth Generation (5G) mobile communication technology (hereinafter referred to as a 5G system). Those skilled in the art will understand that the 5G NR system is merely an example and not a limitation.

Embodiments of this disclosure provide an information acquisition method, an information transmission method, an apparatus, a terminal, and a network device, which can assist a terminal or a network device serving the terminal in determining whether to use carrier aggregation and/or whether to allow the transmission of data of a single bearer through multiple carriers when allocating sidelink interface resources for the terminal.

The method and apparatus are based on the same concept. Since the method and apparatus solve problems in similar ways, for the implementation of one of the apparatus and method, reference may be made to the other of the apparatus and method, and the repeated parts will not be described again.

As shown in Fig. 2, an embodiment of this disclosure provides an information acquisition method, performed by a first terminal, the method including:
Step S201: obtaining target indication information.

It should be noted that the target indication information is used for indicating whether to use sidelink interface carrier aggregation and/or the target indication information is used for indicating a sidelink interface carrier aggregation transmission mode. The target indication information can be understood as indicating information related to sidelink interface carrier aggregation.

It should be noted that, by obtaining information related to sidelink interface carrier aggregation, the embodiments of this disclosure can assist the terminal or the network device serving the terminal in determining whether to use carrier aggregation and/or whether to allow the transmission of data of a single bearer through multiple carriers when allocating sidelink interface resources for the terminal.

In some embodiments, the first terminal refers to an SL sending terminal.

In some embodiments, the specific implementation of obtaining target indication information includes one of the following steps A11 and A12.

A11. Receiving transmission configuration information from a higher layer of the first terminal, wherein the transmission configuration information carries first indication information, and the first indication information is the target indication information.

In some embodiments, the higher layer may be, for example, a Vehicle To Everything (V2X) layer, a Proximity Services (ProSe) layer, or a sidelink interface signalling (PC5-S) layer. The transmission configuration information is configured based on a target Layer 2 address (L2 ID) of the sidelink interface.

In other words, in this case, the target indication information is obtained from the transmission configuration information sent by the higher layer of the first terminal. Generally speaking, the first indication information is used for indicating information related to the sidelink interface carrier aggregation of the first terminal itself.

In some embodiments, according to one implementation, the first indication information includes at least one of the following A111 or A112.

A111. Whether the first terminal uses sidelink interface carrier aggregation (SL CA) when performing data transmission corresponding to a first target object.

In some embodiments, the first target object includes: an L2 ID, a service identifier, or a quality of service (QoS) profile. In some embodiments, the L2 ID may be the target L2 ID of the sidelink interface, or a combination of the source L2 ID and the target L2 ID of the sidelink interface.

It should be noted that, this case can be understood as the first indication information being used for indicating the capability of the first terminal to perform sidelink interface carrier aggregation when transmitting data. The first terminal may or may not use sidelink interface carrier aggregation.

In some embodiments, according to one implementation, whether to use sidelink interface carrier aggregation is indicated by at least one of the following A1111 or A1112.

A1111. indicated by 1 bit.

For example, a value of the bit being 0 indicates that SL CA is not used, and a value of the bit being 1 indicates that SL CA is used; or, a value of the bit being 1 indicates that SL CA is not used, and a value of the bit being 0 indicates that SL CA is used.

A1112. indicated by a band combination (bandcombination).

For example, if at least one bandcombination contains two or more carriers or bandwidth parts (BWPs), then it indicates that SL CA is used; otherwise, it indicates that SL CA is not used.

A112. A sidelink interface carrier aggregation transmission mode used by the first terminal when performing data transmission corresponding to the first target object.

It should be noted that, this case can be understood that the first indication information is used for indicating the first terminal's capability of sidelink interface carrier aggregation transmission mode when the first terminal performs data transmission. In some embodiments, according to one implementation, the carrier aggregation transmission mode includes at least one of the following A1121 or A1122.

A1121. data corresponding to one first target object are transmitted on only one target resource.

In some embodiments, the target resource includes a carrier or a BWP.

It should be noted that, this case can be understood that when the first terminal performs data transmission corresponding to the first target object, data corresponding to the first target object can only be transmitted on one target resource. For example, the data corresponding to one L2 ID can only be transmitted on one carrier; for example, the data corresponding to one service identifier can only be transmitted on one BWP; for example, the data corresponding to one QoS profile can only be transmitted on one carrier.

In some embodiments, the first indication information may further include: the target resource corresponding to the first target object. Generally, the target resource can be identified by its specific frequency, resource number, or resource index.

A1122. data corresponding to one first target object are allowed to be transmitted on multiple target resources.

It should be noted that, this case can be understood that when the first terminal performs data transmission corresponding to the first target object, the data corresponding to the first target object can be transmitted on multiple (two or more) target resources. For example, the data corresponding to one L2 ID can be transmitted on two carriers; for example, the data corresponding to one service identifier can be transmitted on three BWPs; for example, the data corresponding to one QoS profile can be transmitted on two carriers.

A12. Receiving terminal capability information from a second terminal, the terminal capability information carrying second indication information, the second indication information being the target indication information.

In other words, in this case, the target indication information is obtained from the terminal capability information sent by the second terminal. Generally, the second indication information is used for indicating information related to the sidelink interface carrier aggregation of the second terminal.

In some embodiments, according to one implementation, the second indication information includes at least one of the following A121 or A122.

A121. whether a terminal capability of a second terminal supports sidelink interface carrier aggregation.

It should be noted that the second terminal is the SL communication peer of the first terminal.

It should be noted that, this case can be understood that the second indication information is used for indicating whether the second terminal supports the capability of sidelink interface carrier aggregation when transmitting data. The second terminal may or may not support sidelink interface carrier aggregation. In other words, if the second terminal can support sidelink interface carrier aggregation, it can be understood that the terminal capability of the second terminal supports sidelink interface carrier aggregation, and if the second terminal does not support sidelink interface carrier aggregation, it can be understood that the terminal capability of the second terminal does not support sidelink interface carrier aggregation.

In some embodiments, according to one implementation, whether sidelink interface carrier aggregation is supported is indicated by at least one of the following A1211 or A1212.

A1211. indicated by 1 bit.

For example, a value of the bit being 0 indicates that SL CA is not supported, and a value of the bit being 1 indicates that SL CA is supported; or, a value of the bit being 1 indicates that SL CA is not supported, and a value of the bit being 0 indicates that SL CA is supported.

A1212. indicated by a band combination.

For example, if at least one bandcombination contains two or more carriers or BWPs, it indicates that SL CA is supported; otherwise, it indicates that SL CA is not supported.

A122. A sidelink interface carrier aggregation transmission mode supported by the terminal capability of the second terminal.

It should be noted that, this case can be understood that the second indication information is used for indicating the second terminal's capability of sidelink interface carrier aggregation transmission mode when transmitting data. In other words, the second indication information indicates which carrier aggregation transmission mode the terminal capability of the second terminal supports.

In some embodiments, according to one implementation, the carrier aggregation transmission mode includes at least one of the following A1221 or A1222.

A1221. data corresponding to one second target object are transmitted on only one target resource.

In some embodiments, the second target object includes: a sidelink interface logical channel or an L2 ID or a QoS profile or a service identifier; the target resource includes: a carrier or a BWP.

It should be noted that, this case can be understood that the terminal capability of the second terminal only supports data corresponding to one second target object to be transmitted on one target resource. For example, data corresponding to one L2 ID can only be transmitted on one carrier; for example, data corresponding to one service identifier can only be transmitted on one BWP; for example, data corresponding to one QoS profile can only be transmitted on one carrier; for example, data corresponding to one sidelink interface logical channel can only be transmitted on one BWP.

In some embodiments, according to one implementation, the second indication information may further include: the target resource corresponding to the second target object. Generally, the target resource is identified by a resource number or resource index.

A1222. data corresponding to one second target object are allowed to be transmitted on multiple target resources.

It should be noted that, this case can be understood that the terminal capability of the second terminal supports the transmission of data corresponding to one second target object on multiple (two or more) target resources. For example, data corresponding to one L2 ID can be transmitted on two carriers; for example, data corresponding to one service identifier can be transmitted on three BWPs; for example, data corresponding to one QoS profile can be transmitted on two carriers; for example, data corresponding to one sidelink interface logical channel can be transmitted on three BWPs.

In some embodiments, if the target indication information indicates that the first terminal does not use sidelink interface carrier aggregation when performing data transmission corresponding to the first target object, the target indication information is further used for indicating a target resource used by sidelink interface control information and/or sidelink interface data corresponding to the first target object;
wherein the target resource includes: a carrier or a bandwidth part.

It should be noted that, the sidelink interface control information corresponding to the first target object can be sidelink interface signaling (PC5-Signaling, PC5-S) or sidelink interface radio resource control (RRC) (PC5-RRC) signaling. The sidelink interface data corresponding to the first target object can be the service data to be transmitted for the first target object.

This case can be understood as follows: if the terminal does not use sidelink interface carrier aggregation (i.e., the first terminal does not use it, or the second terminal's capabilities do not support it), then it is necessary to determine the carrier or BWP where the sidelink interface control information and/or sidelink interface data corresponding to the first target object is transmitted, to ensure the accurate allocation of sidelink interface resources.

In other words, in some embodiments, if the target indication information is obtained using the above-mentioned A11, the first indication information carried in the transmission configuration information should also indicate, to the first terminal, the target resource used by the sidelink interface control information and/or sidelink interface data corresponding to the first target object. That is, the first indication information should also include: a first indication of the target resource used by the sidelink interface control information and/or sidelink interface data corresponding to the first target object. For example, the first indication is used for indicating the carrier or bandwidth part used by the sidelink interface control information corresponding to the L2 ID, service identifier, or QoS profile; or, the first indication is used for indicating the carrier or bandwidth part used by the sidelink interface data corresponding to the L2 ID, service identifier, or QoS profile.

In some embodiments, if the target indication information is obtained using the above-mentioned A12, the second indication information carried in the terminal capability information should also indicate, to the first terminal, the target resource used by the sidelink interface control information corresponding to the first target object and/or the sidelink interface data corresponding to the first target object. That is, the second indication information should also include: a second indication of the target resources used by the sidelink interface control information corresponding to the first target object and/or the sidelink interface data corresponding to the first target object.

It should be noted that sidelink interface resource allocation includes two modes:
Mode 1, namely, the resource allocation scheduled by network, which requires the network device to allocate resources to the terminal;
Mode 2, namely, the resource allocation according to selection performed by the terminal, which requires the terminal to make its own resource selection.

In some embodiments, if the sidelink interface sending terminal is in Mode 1 after obtaining the target indication information, the sidelink interface sending terminal needs to send third indication information to the network device. The third indication information is used for indicating to the network device that the network device should select sidelink interface resources for the first terminal.

In some embodiments, the third indication information may be determined based on the first indication information or the second indication information.

In some embodiments, according to one implementation, the third indication information includes at least one of the following B11, B12, B13, B14 or B15.

B11. sidelink interface target L2 ID.

B12. a sidelink interface carrier aggregation transmission mode of the first terminal.

It should be noted that the carrier aggregation transmission mode includes the aforementioned A1121 and/or A1122.

B13. indication information about whether a sidelink interface of the first terminal uses sidelink interface carrier aggregation.

In some embodiments, the indication information about whether to use sidelink interface carrier aggregation can be indicated by ON or OFF information. For example, when the information indicates ON, it means that the sidelink interface of the first terminal uses sidelink interface carrier aggregation; when the information indicates OFF, it means that the sidelink interface of the first terminal does not use sidelink interface carrier aggregation.

B14. a sidelink interface carrier aggregation transmission mode of the first terminal that corresponds to a first target object.

It should be noted that the carrier aggregation transmission mode includes the aforementioned A1121 and/or A1122.

B15. terminal capability information of a second terminal.

In some embodiments, the terminal capability information of the second terminal includes the aforementioned A121 and/or A122.

In some embodiments, the terminal may report third indication information to the network device via a Uu interface message (e.g., SidelinkUEInformation).

It should be further noted that, the information transmission mode of the SL sending terminal includes unicast (UC), group cast (GC), and/or broadcast (BC). When an SL sending terminal is conducting unicast communication, the SL sending terminal can clearly know which is the SL peer. Generally, in order for the SL peer to accurately receive the data sent by the SL sending terminal, the SL peer needs to send its own terminal capability information to the SL sending terminal. At this time, the SL sending terminal obtains the second indication information sent by the SL peer. Therefore, the third indication information sent by the SL sending terminal to the network device usually includes B11 and/or B15. When an SL sending terminal is conducting multicast or broadcast communication, since there may be multiple SL peers, the SL sending terminal usually obtains transmission configuration information from its own higher-layer. At this time, the SL sending terminal obtains the first indication information. Therefore, the third indication information sent by the SL sending terminal to the network device usually includes at least one of B11 to B14.

In some embodiments, if the sidelink sending terminal is in Mode 2 after obtaining the target indication information, the sidelink sending terminal needs to perform sidelink interface resource selection based on the transmission configuration information or the terminal capability information.

It should be further noted that, when the SL sending terminal is engaged in unicast communication, the SL sending terminal can clearly know which terminal is the SL peer. Generally, to ensure that the SL peer can accurately receive data sent by the SL sending terminal, the SL peer needs to send its own terminal capability information to the SL sending terminal. At this time, the SL sending terminal obtains the second indication information sent by the SL peer, and therefore allocates sidelink interface resources based on the second indication information. When the SL sending terminal is engaged in multicast or broadcast communication, since there may be multiple SL peers, the SL sending terminal typically receives transmission configuration information from its own higher-layer. At this time, the SL sending terminal obtains the first indication information, and therefore allocates sidelink interface resources based on the first indication information.

In some embodiments, whether the network device performs the sidelink interface resource selection or the SL transmitting terminal performs the sidelink interface resource selection, if data corresponding to a specific target object are allowed to be transmitted on multiple target resources, one or more carriers or BWPs are selected for the specific target object, and specific transmission resources are selected on each carrier or BWP as the transmission resources for the specific target object.

In some embodiments, a specific implementation of selecting multiple carriers or BWPs for a specific target object includes:
selecting multiple carriers or BWPs for a specific target object based on the following principles:
C11. a mapping relationship between services configured by a higher layer and carriers or BWPs;
C12. a correspondence between services and target objects;
C13. a status of the carrier or BWP.

In some embodiments, the status can be, for example, channel busy ratio (CBR) or channel quality.

For example, when selecting based on C13, multiple carriers or BWPs with lower CBR or better channel quality can be selected preferentially. For example, when selecting based on C11 and C12, the mapping relationship between the target object and carriers or BWPs needs to be determined based on C11 and C12 firstly, and then multiple carriers or BWPs can be selected for the specific target object based on the mapping relationship. For example, when selecting based on C11 to C13, the mapping relationship between the target object and carriers or BWPs needs to be determined based on C11 and C12 firstly, then carriers or BWPs can be selected preliminarily for the specific target object based on the mapping relationship, and multiple carriers or BWPs with lower CBR or better channel quality can be selected preferentially from the preliminarily selected carriers or BWPs.

Specific implementations of the embodiments of this disclosure are illustrated below with examples.

Application Scenario 1: SL unicast, using resource allocation mode of Mode 1.

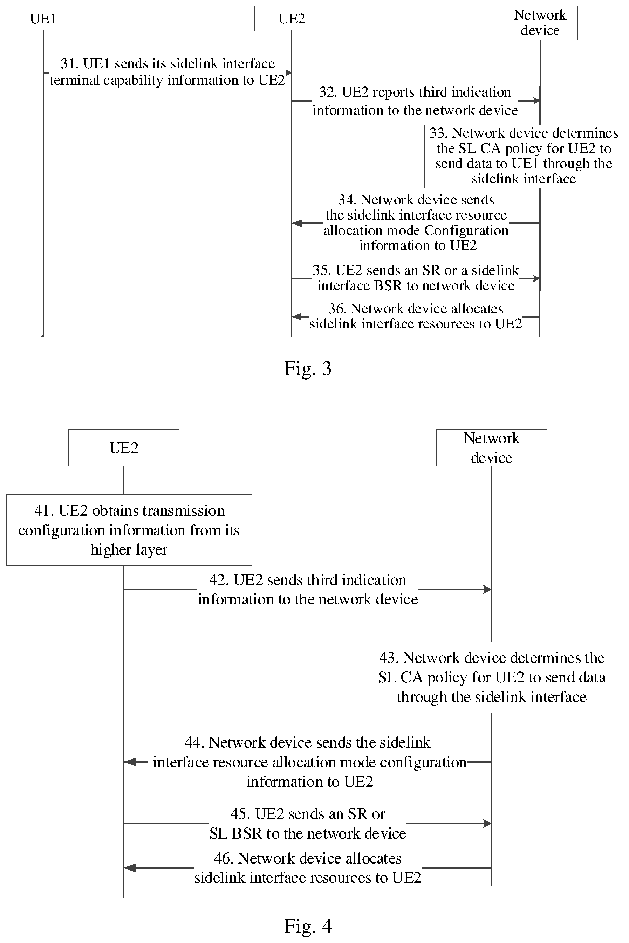

Assuming UE2 is the SL sending terminal and UE1 is the SL peer of UE2, as shown in Fig. 3, the specific implementation process includes the following steps 31 to 36.

Step 31: UE1 sends its sidelink interface terminal capability information to UE2.

After UE1 and UE2 successfully establish a unicast connection, UE1 can send its sidelink interface terminal capability information to UE2. The terminal capability information needs to carry second indication information. The second indication information includes: whether UE1's terminal capability supports sidelink interface carrier aggregation and/or the sidelink interface carrier aggregation transmission mode supported by the terminal capability.

Whether sidelink interface carrier aggregation is supported can be indicated in one of the following ways:
indicated by 1 bit; a value of the bit being 0 indicates that SL CA is not supported, and a value of the bit being 1 indicates that SL CA is supported;
indicated by bandcombination; if at least one bandcombination contains two or more carriers/BWPs, it indicates that SL CA is supported; otherwise, it indicates that SL CA is not supported.

The carrier aggregation transmission mode includes at least one of the following:
data corresponding to one second target object are transmitted on only one carrier or BWP;
data corresponding to one second target object are allowed to be transmitted on multiple carriers or BWPs.

The second target object may be a sidelink interface logical channel, L2 ID, QoS profile, or service identifier.

Step 32: UE2 reports third indication information to the network device. The third indication information includes: UE1's terminal capability information, wherein the terminal capability information is used for indicating the sidelink interface capability.

UE2 can report the third indication information to the network device through a Uu interface message. Specifically, the third indication information can be reported through SidelinkUEInformation, or a new RRC message may be introduced for reporting the third indication information.

Step 33: The network device determines the SL CA policy for UE2 to send data to UE1 through the sidelink interface. The SL CA policy includes: whether to use SL CA and/or SL CA transmission mode.

Step 34: The network device sends the sidelink interface resource allocation mode configuration information to UE2.

The resource allocation mode configuration information can be carried by a Uu interface RRC reconfiguration message.

Step 35: UE2 sends a scheduling request (SR) or a sidelink interface buffer status report (BSR) to the network device.

It should be noted that, the purpose of UE2's sending SR or BSR is to request sidelink interface resources from the network device.

Step 36: The network device allocates sidelink interface resources to UE2.

The network device allocates sidelink interface resources to UE2 according to the SL CA policy determined in step 33.

It should be noted that, if a network device determines that sidelink interface data transmission corresponding to a target object needs to use SL CA and that the SL CA mode is: data corresponding to one target object are allowed to be transmitted on multiple carriers or BWPs, then when the network device performs resource selection, the network device can select multiple carriers or BWPs for a specific target object and select specific transmission resources on each carrier or BWP.

Furthermore, the principles to be considered when selecting multiple carriers or BWPs for the specific target object include at least one of the following:
a mapping relationship between services configured by a higher layer and carriers or BWPs;
a correspondence between services and target objects; or
a status of the carrier or BWP, for example, the status includes CBR or channel quality.

Application Scenario 2: SL multicast or SL broadcast, using resource allocation mode of Mode 1.

Assuming UE2 is an SL sending terminal, for sidelink interface multicast or broadcast, UE2 can corresponds to one or more receiving terminals. As shown in Fig. 4, the specific implementation process includes the following steps 41 to 46.

Step 41: UE2 obtains transmission configuration information from its higher layer.

The transmission configuration information may be, but is not limited to, a Tx Profile. For example, UE2 obtains the transmission configuration information from UE2's V2X layer, ProSe layer, or PC5-S layer. In some embodiments, the transmission configuration information is configured based on the sidelink interface target L2 ID.

The transmission configuration information needs to carry first indication information, wherein the first indication information includes whether UE2 uses sidelink interface carrier aggregation when performing data transmission corresponding to the first target object, and/or the sidelink interface carrier aggregation transmission mode used by UE2 when performing data transmission corresponding to the first target object.

Whether sidelink interface carrier aggregation is used can be indicated in one of the following ways:
indicated by 1 bit; a value of the bit being 0 indicates that SL CA is not used, and a value of the bit being 1 indicates that SL CA is used;
indicated by bandcombination; if at least one bandcombination contains two or more carriers/BWPs, it indicates that SL CA is used; otherwise, it indicates that SL CA is not used.

The carrier aggregation transmission mode includes at least one of the following:
data corresponding to one first target object are transmitted on only one carrier or BWP; or
data corresponding to one first target object are allowed to be transmitted on multiple carriers or BWPs.

The first target object can be an L2 ID, a service identifier, or a QoS profile.

If the carrier aggregation transmission mode is: data corresponding to one first target object are transmitted on only one carrier or BWP, then in some embodiments, the first indication information also needs to carry the target resource corresponding to the first target object.

Step 42: UE2 sends third indication information to the network device.

In some embodiments, UE2 reports third indication information to the network device via a Uu interface message (e.g., a SidelinkUEInformation message), and the third indication information including at least one of the following:
a sidelink interface target L2 ID;
a sidelink interface carrier aggregation transmission mode of UE2;
indication information about whether UE2's sidelink interface uses sidelink interface carrier aggregation; or
UE2's sidelink interface carrier aggregation transmission mode corresponding to the first target object.

Step 43: The network device determines the SL CA policy for UE2 to send data through the sidelink interface. The SL CA policy includes whether to use SL CA and/or the SL CA transmission mode for each target L2 ID or each bearer or logical channel of the target L2 ID.

Step 44: The network device sends the sidelink interface resource allocation mode configuration information to UE2.

The resource allocation mode configuration information can be carried by the Uu interface RRC Reconfiguration message.

Step 45: UE2 sends an SR or SL BSR to the network device.

It should be noted that the purpose of UE1's sending SR or SL BSR is to request sidelink interface resources from the network device.

Step 46: The network device allocates sidelink interface resources to UE2.

The network device allocates sidelink interface resources to UE2 according to the SL CA policy determined in step 43.

It should be noted that, if the network device determines that sidelink data transmission corresponding to one target object needs to use SL CA and that the SL CA mode is: data corresponding to one target object are allowed to be transmitted on multiple carriers or BWPs, then when the network device performs resource selection, the network device can select multiple carriers or BWPs for a specific target object and select specific transmission resources on each carrier or BWP.

Furthermore, the principles to be considered when selecting multiple carriers or BWPs for the specific target object include at least one of the following:
a mapping relationship between services configured by a higher layer and carriers or BWPs;
a correspondence between services and target objects; or
a status of the carrier or BWP, for example, the status includes CBR or channel quality.

Application Scenario 3: SL unicast, using resource allocation mode of Mode 2.

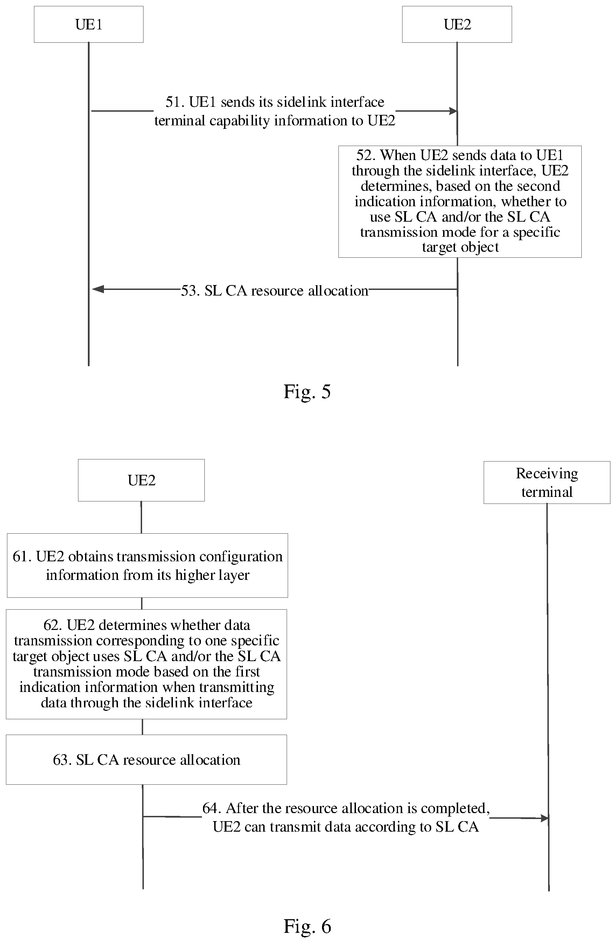

Assuming UE2 is the SL sending terminal and UE1 is the communication peer of UE2, as shown in Fig. 5, the specific implementation process includes the following steps 51, 52 and 53.

Step 51: UE1 sends its sidelink interface terminal capability information to UE2.

After UE1 and UE2 successfully establish a unicast connection, UE1 can send its sidelink interface terminal capability information to UE2. The terminal capability information needs to carry second indication information, the second indication information includes: whether UE1's terminal capability supports sidelink interface carrier aggregation and/or the sidelink interface carrier aggregation transmission mode supported by the terminal capability.

Whether sidelink interface carrier aggregation is supported can be indicated in one of the following ways:
indicated by 1-bit; a value of the bit being 0 indicates that SL CA is not supported; a value of the bit being 1 indicates that SL CA is supported;
indicated by bandcombination; if at least one bandcombination contains two or more carriers/BWPs, it means that SL CA is supported; otherwise, it means that SL CA is not supported.

The carrier aggregation transmission mode includes at least one of the following:
data corresponding to one second target object are transmitted on only one carrier or BWP; or
data corresponding to one second target object are allowed to be transmitted on multiple carriers or BWPs.

The second target object can be a sidelink interface logical channel, L2 ID, QoS profile, or service identifier.

Step 52: When UE2 sends data to UE1 through the sidelink interface, UE2 determines, based on the second indication information, whether to use SL CA and/or the SL CA transmission mode for a specific target object.

Step 53: SL CA resource allocation.

It should be noted that, if UE2 determines that SL CA resource allocation is required for a target object and that the SL CA mode is: data corresponding to one target object can be transmitted on multiple carriers or BWPs, then when UE2 performs resource selection, UE2 can select multiple carriers or BWPs for a specific target object and select specific transmission resources on each carrier or BWP.

Further, the principles to be considered when selecting multiple carriers or BWPs for the specific target object include at least one of the following:
a mapping relationship between services configured by a higher layer and carriers or BWPs;
a correspondence between services and target objects;
a status of the carrier or BWP, for example, the status includes CBR or channel quality.

It should be noted that, UE2 can transmit data according to SL CA after the resource allocation is completed.

Application Scenario 4: SL multicast or SL broadcast, using resource allocation mode of Mode 2.

Assuming UE2 is an SL sending terminal, for sidelink interface multicast or broadcast, UE2 can correspond to one or more receiving terminals. As shown in Fig. 6, the specific implementation process includes the following steps 61 to 64.

Step 61: UE2 obtains transmission configuration information from its higher layer.

The transmission configuration information may be, but is not limited to, a Tx Profile. For example, UE2 obtains the transmission configuration information from its V2X layer, ProSe layer, or PC5-S layer. In some embodiments, the transmission configuration information is configured based on the sidelink interface target L2 ID.

The transmission configuration information needs to carry first indication information, wherein the first indication information includes: whether UE2 uses sidelink interface carrier aggregation when performing data transmission corresponding to the first target object, and/or the sidelink interface carrier aggregation transmission mode used by UE2 when performing data transmission corresponding to the first target object.

Whether sidelink interface carrier aggregation is used can be indicated in one of the following ways:
indicated by 1 bit; a value of the bit being 0 indicates that SL CA is not used, and a value of the bit being 1 indicates that SL CA is used;
indicated by bandcombination; if at least one bandcombination contains two or more carriers/BWPs, it indicates that SL CA is used; otherwise, it indicates that SL CA is not used.

The carrier aggregation transmission mode includes at least one of the following:
data corresponding to one first target object are transmitted on only one carrier or BWP; or
data corresponding to one first target object are allowed to be transmitted on multiple carriers or BWPs.

The first target object can be an L2 ID, a service identifier, or a QoS profile.

If the carrier aggregation transmission mode is: data corresponding to one first target object are transmitted on only one carrier or BWP, then in some embodiments, the first indication information also needs to carry the target resource corresponding to the first target object.

Step 62: UE2 determines whether data transmission corresponding to one specific target object uses SL CA and/or the SL CA transmission mode based on the first indication information when transmitting data through the sidelink interface.

Step 63: SL CA resource allocation.

It should be noted that, if UE2 determines that SL CA resource allocation is required for a target object and that the SL CA mode is: data corresponding to one target object can be transmitted on multiple carriers or BWPs, then when UE2 performs resource selection, UE2 can select multiple carriers or BWPs for a specific target object and select specific transmission resources on each carrier or BWP.

Further, the principles to be considered when selecting multiple carriers or BWPs for the specific target object include at least one of the following:
a mapping relationship between services configured by a higher layer and carriers or BWPs;
a correspondence between services and target objects; or
a status of the carrier or BWP, for example, the status includes CBR or channel quality.

Step 64: After the resource allocation is completed, UE2 can transmit data according to SL CA.

It should be noted that the embodiments of this disclosure can assist a resource allocation node in determining whether to use SL CA for the SL interface target object and/or the specific SL CA transmission mode used, so as to ensure that the communication peer can receive in the same way, thereby improving the reliability of data transmission.

Technical solutions provided in the embodiments of this disclosure are applicable to a variety of systems, especially 5G systems. For example, applicable systems may include Global System for Mobile Communication (GSM), Code Division Multiple Access (CDMA), Wideband Code Division Multiple Access (WCDMA), General Packet Radio Service (GPRS), Long Term Evolution (LTE), LTE Frequency Division Duplex (FDD), LTE Time Division Duplex (TDD), Long Term Evolution Advanced (LTE-A), Universal Mobile Telecommunications System (UMTS), Worldwide Interoperability for Microwave Access (WiMAX), and 5G New Radio (NR). All of these systems include a terminal (also referred to as terminal device) and a network device. The systems may also include a core network component, such as Evolved Packet System (EPS) and 5G systems (5GS).

The terminal involved in the embodiments of this disclosure, also referred to as a terminal device, can be a device that provides voice and/or data connectivity to a user, a handheld device with wireless connectivity, or other processing devices connected to a wireless modem. The name of the terminal device may differ in different systems; for example, in a 5G system, the terminal device may be called user equipment (UE). The wireless terminal device can communicate with one or more core networks (CNs) via a Radio Access Network (RAN). The wireless terminal device can be a mobile terminal device, such as a mobile phone (or "cellular" phone) and a computer with a mobile terminal device, for example, a portable, pocket-sized, handheld, computer-embedded, or vehicle-mounted mobile device, which exchanges voice and/or data with the radio access network. Examples include Personal Communication Service (PCS) phones, cordless phones, Session Initiated Protocol (SIP) phones, Wireless Local Loop (WLL) stations, and Personal Digital Assistants (PDAs). Wireless terminal device can also be referred to as a system, subscriber unit, subscriber station, mobile station, mobile, remote station, access point, remote terminal, access terminal, user terminal, user agent, or user device, but this is not limited in the embodiments of this disclosure.

The network device involved in the embodiments of this disclosure may be a base station, which may include multiple cells providing services to terminals. Depending on the specific application, the base station may also be called an access point, or a device in the access network that communicates with the wireless terminal device through one or more sectors on the air interface, or other names. The network device may be used to convert received air frames into Internet Protocol (IP) packets, or vice versa, acting as a router between the wireless terminal device and the rest of the access network, which may include an Internet Protocol (IP) communication network. The network device may also coordinate the attribute management of the air interface. For example, the network device involved in the embodiments of this disclosure can be a base transceiver station (BTS) in a Global System for Mobile communications (GSM) or Code Division Multiple Access (CDMA) system, a NodeB in a wide-band Code Division Multiple Access (WCDMA) system, an evolved Node B (eNB or e-NodeB) in a long term evolution (LTE) system, a 5G base station (gNB) in a next generation system, a Home evolved Node B (HeNB), a relay node, a femto, a pico, etc., and is not limited in the embodiments of this disclosure. In some network structures, the network device may include a centralized unit (CU) and a distributed unit (DU), and the centralized unit and distributed unit may be geographically separated.

Network devices and terminal devices can each use one or more antennas to perform multiple-input multiple-output (MIMO) transmission. MIMO transmission can be single-user MIMO (SU-MIMO) or multiple-user MIMO (MU-MIMO). Depending on the configuration and number of antenna combinations, MIMO transmission can be two-dimensional MIMO (2D-MIMO), three-dimensional MIMO (3D-MIMO), full-dimensional MIMO (FD-MIMO), or massive MIMO (massive-MIMO), and can also be diversity transmission, pre-coded transmission, or beamforming transmission, etc.

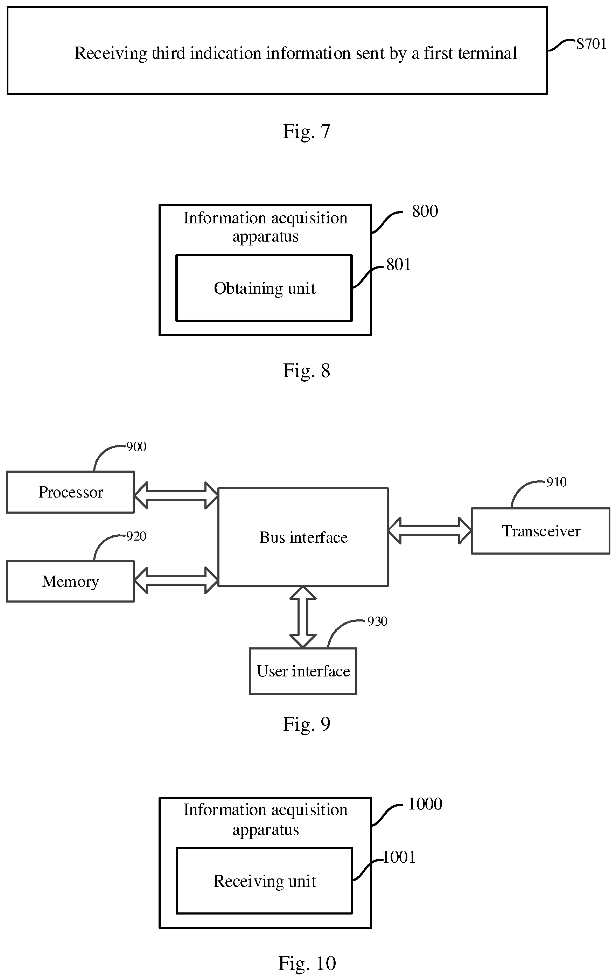

As shown in Fig. 7, an embodiment of this disclosure provides an information acquisition method, performed by a network device, the method including:
Step S701: receiving third indication information sent by a first terminal, wherein the third indication information includes at least one of the following:
a sidelink interface target Layer 2 address (L2 ID);
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object, wherein the first target object includes: a Layer 2 address (L2 ID) or a service identifier or a QoS profile; or
terminal capability information of a second terminal, wherein the second terminal is a sidelink peer of the first terminal.

In some embodiments, whether sidelink interface carrier aggregation is used is indicated by at least one of the following:
1 bit; or
a band combination.

In some embodiments, the sidelink interface carrier aggregation transmission mode includes at least one of the following:
data corresponding to one first target object are transmitted on only one target resource; or
data corresponding to one first target object are allowed to be transmitted on multiple target resources;
wherein the target resource includes: a carrier or a bandwidth part.

In some embodiments, the method further includes:
selecting a sidelink interface resource for the first terminal based on the third indication information.

It should be noted that all the implementations of the above embodiments are applicable to the embodiments of the information acquisition method performed by the network device, and can achieve the same technical effect, so they will not be described again here.

As shown in Fig. 8, an embodiment of this disclosure provides an information acquisition apparatus 800, applied to a first terminal, including:
an obtaining unit 801, configured to obtain target indication information, wherein the target indication information is used for indicating whether to use sidelink interface carrier aggregation and/or for indicating a sidelink interface carrier aggregation transmission mode.

In some embodiments, the obtaining unit 801 is configured to:
receive transmission configuration information from a higher layer of the first terminal, the transmission configuration information carrying first indication information, the first indication information being the target indication information; or
receive terminal capability information from a second terminal, the terminal capability information carrying second indication information, the second indication information being the target indication information;
wherein the first indication information includes at least one of the following:
   whether the first terminal uses sidelink interface carrier aggregation when performing data transmission corresponding to a first target object; or
   a sidelink interface carrier aggregation transmission mode used by the first terminal when performing data transmission corresponding to the first target object;
   the second indication information includes at least one of the following:
      whether a terminal capability of a second terminal supports sidelink interface carrier aggregation; or
      a sidelink interface carrier aggregation transmission mode supported by the terminal capability of the second terminal;
      wherein the second terminal is a sidelink peer of the first terminal, and the first target object includes: a Layer 2 address (L2 ID) or a service identifier or a QoS profile.

In some embodiments, whether sidelink interface carrier aggregation is supported or whether sidelink interface carrier aggregation is used is indicated by at least one of the following:
1 bit; or
a band combination.

In some embodiments, in a case that the first indication information includes the sidelink interface carrier aggregation transmission mode used by the first terminal when performing data transmission corresponding to the first target object, the sidelink interface carrier aggregation transmission mode includes at least one of the following:
data corresponding to one first target object are transmitted on only one target resource; or
data corresponding to one first target object are allowed to be transmitted on multiple target resources;
wherein the target resource includes: a carrier or a bandwidth part.

In some embodiments, in a case that the sidelink interface carrier aggregation transmission mode includes that data corresponding to one first target object are transmitted on only one target resource, the first indication information further includes: the target resource corresponding to the first target object.

In some embodiments, in a case that the second indication information includes the sidelink interface carrier aggregation transmission mode supported by the terminal capability of the second terminal, the sidelink interface carrier aggregation transmission mode includes at least one of the following:
data corresponding to one second target object are transmitted on only one target resource; or
data corresponding to one second target object are allowed to be transmitted on multiple target resources;
wherein the second target object includes: a sidelink interface logical channel, an L2 ID, a QoS profile, or a service identifier; the target resource includes: a carrier or a bandwidth part.

In some embodiments, in a case that the sidelink interface carrier aggregation transmission mode includes that data corresponding to one second target object are transmitted on only one target resource, the second indication information further includes: the target resource corresponding to the second target object.

In some embodiments, the apparatus further includes:
a second sending unit, configured to send third indication information to a network device, the third indication information including at least one of the following:
a sidelink interface target L2 ID;
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object; or
terminal capability information of a second terminal.

In some embodiments, the apparatus further includes:
an execution unit, configured to perform sidelink interface resource selection based on the transmission configuration information or the terminal capability information.

In some embodiments, in a case that the target indication information indicates that the first terminal does not use sidelink interface carrier aggregation when performing data transmission corresponding to the first target object, the target indication information is also used for indicating a target resource used by sidelink interface control information and/or sidelink interface data corresponding to the first target object;
wherein the target resource includes: a carrier or a bandwidth part.

It should be noted that the apparatus embodiment corresponds to the above method embodiment. All implementations in the above method embodiments are applicable to the apparatus embodiment and can achieve the same technical effect.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to related technologies, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, removable hard disks, read-only memory (ROM), random access memory (RAM), magnetic disks, or optical discs.

As shown in Fig. 9, an embodiment of this disclosure also provides a terminal, which is a first terminal, and includes a processor 900, a transceiver 910, a memory 920, and a program stored in the memory 920 and executable on the processor 900; wherein the transceiver 910 is connected to the processor 900 and the memory 920 via a bus interface, and the processor 900 is used for reading the program in the memory and executing the following step:
obtaining target indication information, wherein the target indication information is used for indicating whether to use sidelink interface carrier aggregation and/or for indicating a sidelink interface carrier aggregation transmission mode.

The transceiver 910 is used for receiving and sending data under the control of processor 900.

In Fig. 9, the bus architecture can include any number of interconnected buses and bridges, specifically linking various circuits of one or more processors represented by processor 900 and memory represented by memory 920. The bus architecture can also link various other circuits such as peripheral devices, voltage regulators, and power management circuits, which are well known in the art and therefore will not be described further herein. The bus interface provides an interface. The transceiver 910 can be multiple components, including a transmitters and a receiver, providing a unit for communicating with various other devices over a transmission medium, including wireless channels, wired channels, optical fibers, etc. For different user equipment, the user interface 930 can also be an interface capable of connecting external or internal devices, including but not limited to keypads, displays, speakers, microphones, joysticks, etc.

The processor 900 is responsible for managing the bus architecture and general processing, and the memory 920 can store the data used by the processor 900 during operation.

Optionally, the processor 900 may be a central processing unit (CPU), an application-specific integrated circuit (ASIC), a field-programmable gate array (FPGA), or a complex programmable logic device (CPLD), and the processor may also adopt a multi-core architecture.

By invoking a computer program stored in memory, the processor executes any of the methods described in the embodiments of this disclosure according to the obtained executable instructions. The processor and memory may also be physically separated.

In some embodiments, the processor is used for reading a computer program from the memory and performing the following step:
receiving transmission configuration information from a higher layer of the first terminal, the transmission configuration information carrying first indication information, the first indication information being the target indication information; or
receiving terminal capability information from a second terminal, the terminal capability information carrying second indication information, the second indication information being the target indication information;
wherein the first indication information includes at least one of the following:
   whether the first terminal uses sidelink interface carrier aggregation when performing data transmission corresponding to a first target object; or
   a sidelink interface carrier aggregation transmission mode used by the first terminal when performing data transmission corresponding to the first target object;
   the second indication information includes at least one of the following:
      whether a terminal capability of the second terminal supports sidelink interface carrier aggregation; or
      a sidelink interface carrier aggregation transmission mode supported by the terminal capability of the second terminal;
      wherein the second terminal is a sidelink peer of the first terminal, and the first target object includes: a Layer 2 address (L2 ID) or a service identifier or a QoS profile.

In some embodiments, whether sidelink interface carrier aggregation is supported or whether sidelink interface carrier aggregation is used is indicated by at least one of the following:
1 bit; or
a band combination.

In some embodiments, in a case that the first indication information includes the sidelink interface carrier aggregation transmission mode used by the first terminal when performing data transmission corresponding to the first target object, the sidelink interface carrier aggregation transmission mode includes at least one of the following:
data corresponding to one first target object are transmitted on only one target resource; or
data corresponding to one first target object are allowed to be transmitted on multiple target resources;
wherein the target resource includes: a carrier or a bandwidth part.

In some embodiments, in a case that the sidelink interface carrier aggregation transmission mode includes that data corresponding to one first target object are transmitted on only one target resource, the first indication information further includes: the target resource corresponding to the first target object.

In some embodiments, in a case that the second indication information includes the sidelink interface carrier aggregation transmission mode supported by the terminal capability of the second terminal, the sidelink interface carrier aggregation transmission mode includes at least one of the following:
data corresponding to one second target object are transmitted on only one target resource; or
data corresponding to one second target object are allowed to be transmitted on multiple target resources;
wherein the second target object includes: a sidelink interface logical channel, an L2 ID, a QoS profile, or a service identifier; the target resource includes: a carrier or a bandwidth part.

In some embodiments, in a case that the sidelink interface carrier aggregation transmission mode includes that data corresponding to one second target object are transmitted on only one target resource, the second indication information further includes: the target resource corresponding to the second target object.

In some embodiments, the processor is used for reading the computer program from the memory and further performing the following step:
sending third indication information to a network device via the transceiver, the third indication information including at least one of the following:
a sidelink interface target L2 ID;
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object; or
terminal capability information of a second terminal.

In some embodiments, the processor is used for reading the computer program from the memory and further performing the following step:
performing sidelink interface resource selection based on the transmission configuration information or the terminal capability information.

In some embodiments, in a case that the target indication information indicates that the first terminal does not use sidelink interface carrier aggregation when performing data transmission corresponding to the first target object, the target indication information is also used for indicating a target resource used by sidelink interface control information and/or sidelink interface data corresponding to the first target object;
wherein the target resource includes: a carrier or a bandwidth part.

It should be noted that the terminal provided in this embodiment can implement all the method steps implemented in the above method embodiments and achieve the same technical effect. Therefore, the parts and beneficial effects that are the same as those in the method embodiment will not be described in detail here.

An embodiment of this disclosure further provides a computer-readable storage medium storing a computer program, wherein the computer program, when executed by a processor, implements the steps of the information acquisition method performed by a first terminal. The processor-readable storage medium can be any available medium or data storage device accessible to the processor, including but not limited to magnetic storage (e.g., floppy disk, hard disk, magnetic tape, magneto-optical disk (MO), etc.), optical storage (e.g., compact disc (CD), digital video disc (DVD), Blu-ray disc (BD), high-definition versatile disc (HVD), etc.), and semiconductor storage (e.g., read-only memory (ROM), erasable programmable read-only memory (EPROM), electrically erasable programmable read-only memory (EEPROM), non-volatile memory (NAND FLASH), solid-state disk (SSD), etc.).

As shown in Fig. 10, an embodiment of this disclosure provides an information acquisition apparatus 1000, applied to a network device, including:
a receiving unit 1001, configured to receive third indication information sent by a first terminal, the third indication information including at least one of the following:
a sidelink interface target Layer 2 address (L2 ID);
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object, wherein the first target object includes: a Layer 2 address (L2 ID) or a service identifier or a QoS profile; or
terminal capability information of a second terminal, wherein the second terminal is a sidelink peer of the first terminal.

In some embodiments, whether sidelink interface carrier aggregation is used is indicated by at least one of the following:
1 bit; or
a band combination.

In some embodiments, the sidelink interface carrier aggregation transmission mode includes at least one of the following:
data corresponding to one first target object are transmitted on only one target resource; or
data corresponding to one first target object are allowed to be transmitted on multiple target resources;
wherein the target resource includes: a carrier or a bandwidth part.

In some embodiments, the apparatus further includes:
a selection unit, configured to select a sidelink interface resource for the first terminal according to the third indication information.

It should be noted that the apparatus embodiment corresponds to the above method embodiments. All implementations in the above method embodiments are applicable to the apparatus embodiment and can achieve the same technical effect.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to related technologies, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, removable hard disks, read-only memory (ROM), random access memory (RAM), magnetic disks, or optical discs.

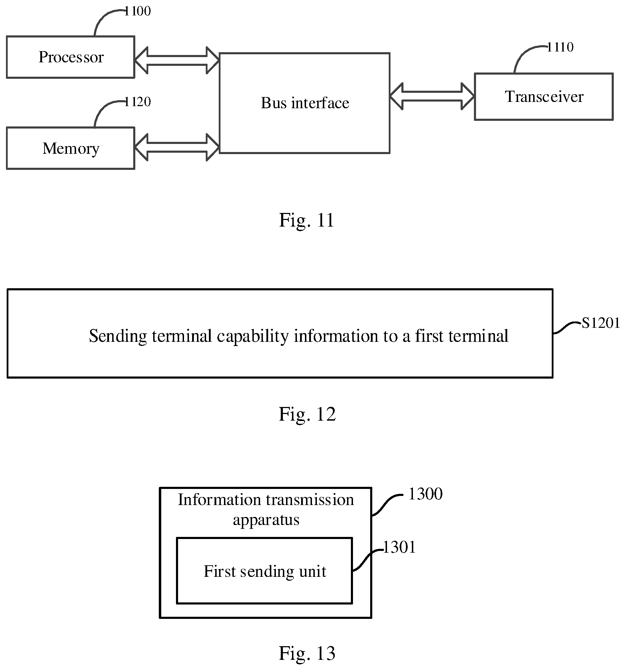

As shown in Fig. 11, an embodiment of this disclosure also provides a network device, including a processor 1100, a transceiver 1110, a memory 1120, and a program stored in the memory 1120 and executable on the processor 1100; wherein the transceiver 1110 is connected to the processor 1100 and the memory 1120 via a bus interface, and the processor 1100 is used for reading the program in the memory and executing the following step:
receiving, via the transceiver, third indication information sent by a first terminal, the third indication information including at least one of the following:
a sidelink interface target Layer 2 address (L2 ID);
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object, wherein the first target object includes: a Layer 2 address (L2 ID) or a service identifier or a QoS profile; or
terminal capability information of a second terminal, wherein the second terminal is a sidelink peer of the first terminal.

The transceiver 1110 is used for receiving and sending data under the control of processor 1100.

In Fig. 11, the bus architecture may include any number of interconnected buses and bridges, specifically linking various circuits of one or more processors represented by processor 1100 and memory represented by memory 1120. The bus architecture may also link various other circuits such as peripheral devices, voltage regulators, and power management circuits, which are well known in the art and therefore will not be described further herein. The bus interface provides an interface. The transceiver 1110 may be multiple elements, including a transmitter and a receiver, providing a unit for communicating with various other devices over a transmission medium, including wireless channels, wired channels, optical fibers, and other transmission media.

The processor 1100 is responsible for managing the bus architecture and general processing, and the memory 1120 can store the data used by the processor 1100 when performing operations.

Optionally, the processor 1100 may be a central processing unit (CPU), an application-specific integrated circuit (ASIC), a field-programmable gate array (FPGA), or a complex programmable logic device (CPLD), and the processor may also adopt a multi-core architecture.

By invoking a computer program stored in memory, the processor executes any of the methods described in the embodiments of this disclosure according to the obtained executable instructions. The processor and memory may also be physically separated.

In some embodiments, whether sidelink interface carrier aggregation is used is indicated by at least one of the following:
1 bit; or
a band combination.

In some embodiments, the sidelink interface carrier aggregation transmission mode includes at least one of the following:
data corresponding to one first target object are transmitted on only one target resource; or
data corresponding to one first target object are allowed to be transmitted on multiple target resources;
wherein the target resource includes: a carrier or a bandwidth part.

In some embodiments, the processor is used for reading the computer program from the memory and further performing the following step:
selecting a sidelink interface resource for the first terminal based on the third indication information.

It should be noted that the network device provided in this embodiment can implement all the method steps implemented in the above method embodiment and can achieve the same technical effect. Therefore, the parts and beneficial effects that are the same as those in the method embodiment will not be described in detail here.

An embodiment of this disclosure further provides a computer-readable storage medium storing a computer program thereon, wherein the computer program, when executed by a processor, implements the steps of an information acquisition method performed by a network device. The processor-readable storage medium can be any available medium or data storage device accessible to the processor, including but not limited to magnetic storage (e.g., floppy disks, hard disks, magnetic tapes, magneto-optical discs (MO), etc.), optical storage (e.g., CDs, DVDs, BDs, HVDs, etc.), and semiconductor storage (e.g., ROMs, EPROMs, EEPROMs, non-volatile memory (NAND flash), solid-state drives (SSDs)).

As shown in Fig. 12, an embodiment of this disclosure provides an information transmission method, performed by a second terminal, the method including:
Step S1201: sending terminal capability information to a first terminal, wherein the terminal capability information carries second indication information;
the second indication information includes at least one of the following:
   whether a terminal capability of the second terminal supports sidelink interface carrier aggregation; or
   a sidelink interface carrier aggregation transmission mode supported by the terminal capability of the second terminal;
   wherein the second terminal is a sidelink peer of the first terminal.

In some embodiments, whether sidelink interface carrier aggregation is supported or whether sidelink interface carrier aggregation is used is indicated by at least one of the following:
1 bit; or
a band combination.

In some embodiments, in a case that the second indication information includes the sidelink interface carrier aggregation transmission mode supported by the terminal capability of the second terminal, the sidelink interface carrier aggregation transmission mode includes at least one of the following:
data corresponding to one second target object are transmitted on only one target resource; or
data corresponding to one second target object are allowed to be transmitted on multiple target resources;
wherein the second target object includes: a sidelink interface logical channel, an L2 ID, a QoS profile, or a service identifier; the target resource includes: a carrier or a bandwidth part.

In some embodiments, in a case that the sidelink interface carrier aggregation transmission mode includes that data corresponding to one second target object are transmitted on only one target resource, the second indication information further includes: the target resource corresponding to the second target object.

It should be noted that all the implementations in the above embodiment are applicable to the embodiments of the information transmission method performed by the second terminal and can achieve the same technical effect, so they will not be described again here.

As shown in Fig. 13, an embodiment of this disclosure provides an information transmission apparatus 1300, applied to a second terminal, including:
a first sending unit 1301, configured to send terminal capability information to a first terminal, wherein the terminal capability information carries second indication information;
the second indication information includes at least one of the following:
   whether a terminal capability of the second terminal supports sidelink interface carrier aggregation; or
   a sidelink interface carrier aggregation transmission mode supported by the terminal capability of the second terminal;
   wherein the second terminal is a sidelink peer of the first terminal.

In some embodiments, whether sidelink interface carrier aggregation is supported or whether sidelink interface carrier aggregation is used is indicated by at least one of the following:
1 bit; or
a band combination.

In some embodiments, in a case that the second indication information includes the sidelink interface carrier aggregation transmission mode supported by the terminal capability of the second terminal, the sidelink interface carrier aggregation transmission mode includes at least one of the following:
data corresponding to one second target object are transmitted on only one target resource; or
data corresponding to one second target object are allowed to be transmitted on multiple target resources;
wherein the second target object includes: a sidelink interface logical channel, an L2 ID, a QoS profile, or a service identifier; the target resource includes: a carrier or a bandwidth part.

In some embodiments, in a case that the sidelink interface carrier aggregation transmission mode includes that data corresponding to one second target object are transmitted on only one target resource, the second indication information further includes: the target resource corresponding to the second target object.

It should be noted that the apparatus embodiment corresponds to the above method embodiments. All implementations in the above method embodiments are applicable to the apparatus embodiment and can achieve the same technical effect.

It should be noted that the division of units in the embodiments of this disclosure is illustrative and only represents one logical functional division. In actual implementation, other division methods may be used. Furthermore, the functional units in the various embodiments of this disclosure can be integrated into one processing unit, or each unit can exist physically separately, or two or more units can be integrated into one unit. The integrated units described above can be implemented in hardware or as software functional units.

If the integrated unit is implemented as a software functional unit and sold or used as an independent product, it can be stored in a processor-readable storage medium. Based on this understanding, the technical solution of this disclosure, in essence, or the part that contributes to related technologies, or all or part of the technical solution, can be embodied in the form of a software product. This computer software product is stored in a storage medium and includes several instructions to cause a computer device (which may be a personal computer, server, or network device, etc.) or processor to execute all or part of the steps of the methods described in the various embodiments of this disclosure. The aforementioned storage medium includes various media capable of storing program code, such as USB flash drives, removable hard disks, read-only memory (ROM), random access memory (RAM), magnetic disks, or optical discs.

An embodiment of this disclosure also provides a terminal, which is a second terminal. The structure of the second terminal is as shown in Fig. 9, and will not be described again here.

The processor is used for read the computer program from the memory and perform the following step:
sending, via the transceiver, terminal capability information to a first terminal, and the terminal capability information carries second indication information;
the second indication information includes at least one of the following:
   whether a terminal capability of the second terminal supports sidelink interface carrier aggregation; or
   a sidelink interface carrier aggregation transmission mode supported by the terminal capability of the second terminal;
   wherein the second terminal is a sidelink peer of the first terminal.

In some embodiments, whether sidelink interface carrier aggregation is supported or whether sidelink interface carrier aggregation is used is indicated by at least one of the following:
1 bit; or
a band combination.

In some embodiments, in a case that the second indication information includes the sidelink interface carrier aggregation transmission mode supported by the terminal capability of the second terminal, the sidelink interface carrier aggregation transmission mode includes at least one of the following:
data corresponding to one second target object are transmitted on only one target resource; or
data corresponding to one second target object are allowed to be transmitted on multiple target resources;
wherein the second target object includes: a sidelink interface logical channel, an L2 ID, a QoS profile, or a service identifier; the target resource includes: a carrier or a bandwidth part.

In some embodiments, in a case that the sidelink interface carrier aggregation transmission mode includes that data corresponding to one second target object are transmitted on only one target resource, the second indication information further includes: the target resource corresponding to the second target object.

An embodiment of this disclosure further provides a computer-readable storage medium storing a computer program thereon, wherein the computer program, when executed by a processor, implements the steps of an information transmission method performed by a second terminal. The processor-readable storage medium can be any available medium or data storage device accessible to the processor, including but not limited to magnetic storage (e.g., floppy disks, hard disks, magnetic tapes, magneto-optical discs (MO), etc.), optical storage (e.g., CDs, DVDs, BDs, HVDs, etc.), and semiconductor storage (e.g., ROMs, EPROMs, EEPROMs, non-volatile memory (NAND flash), solid-state drives (SSDs), etc.).

Those skilled in the art will understand that embodiments of this disclosure can be provided as methods, systems, or computer program products. Therefore, this disclosure can take the form of a completely hardware embodiment, a completely software embodiment, or an embodiment combining software and hardware aspects. Furthermore, this disclosure can take the form of a computer program product embodied on one or more computer-usable storage media (including, but not limited to, disk storage and optical storage) containing computer-usable program codes.

This disclosure is described with reference to flowcharts and/or block diagrams of methods, apparatus (systems), and computer program products according to embodiments of this disclosure. It will be understood that each block of the flowcharts and/or block diagrams, and combinations of blocks in the flowcharts and/or block diagrams, can be implemented by computer-executable instructions. These computer-executable instructions can be provided to a processor of a general-purpose computer, special-purpose computer, embedded processor, or other programmable data processing apparatus to produce a machine, such that the instructions, which are executed by the processor of the computer or other programmable data processing apparatus, create means for implementing the functions specified in one or more flowcharts and/or one or more block diagrams.

These processor-executable instructions may also be stored in a processor-readable memory that can instruct a computer or other programmable data processing device to operate in a particular manner, such that the instructions stored in the processor-readable memory produce an article of manufacture including instruction means that implement the functions specified in one or more flowcharts and/or one or more block diagrams.

These processor-executable instructions can also be loaded onto a computer or other programmable data processing device to cause a series of operational steps to be performed on the computer or other programmable device to produce a computer-implemented process, such that the instructions, which are executed by the computer or other programmable device, provide steps for implementing the functions specified in one or more flowcharts and/or one or more block diagrams.

Obviously, those skilled in the art can make various modifications and variations to this disclosure without departing from its spirit and scope. Therefore, if such modifications and variations fall within the scope of the claims of this disclosure and their equivalents, this disclosure is also intended to include such modifications and variations.

## Claims

1. An information acquisition method, performed by a first terminal, comprising:
obtaining target indication information, wherein the target indication information is used for indicating whether to use sidelink interface carrier aggregation and/or for indicating a sidelink interface carrier aggregation transmission mode.

2. The method according to claim 1, wherein the obtaining the target indication information comprises:
receiving transmission configuration information from a higher layer of the first terminal, the transmission configuration information carrying first indication information, the first indication information being the target indication information; or
receiving terminal capability information from a second terminal, the terminal capability information carrying second indication information, the second indication information being the target indication information;
wherein the first indication information comprises at least one of the following:
whether the first terminal uses sidelink interface carrier aggregation when performing data transmission corresponding to a first target object; or
a sidelink interface carrier aggregation transmission mode used by the first terminal when performing data transmission corresponding to the first target object;
the second indication information comprises at least one of the following:
whether a terminal capability of a second terminal supports sidelink interface carrier aggregation; or
a sidelink interface carrier aggregation transmission mode supported by the terminal capability of the second terminal;
wherein the second terminal is a sidelink peer of the first terminal, and the first target object comprises: a Layer 2 address (L2 ID) or a service identifier or a Quality of Service (QoS) profile.

3. The method according to claim 2, wherein whether sidelink interface carrier aggregation is supported or whether sidelink interface carrier aggregation is used is indicated by at least one of the following:
1 bit; or
a band combination.

4. The method according to claim 2, wherein, in a case that the first indication information comprises the sidelink interface carrier aggregation transmission mode used by the first terminal when performing data transmission corresponding to the first target object, the sidelink interface carrier aggregation transmission mode comprises at least one of the following:
data corresponding to one first target object are transmitted on only one target resource; or
data corresponding to one first target object are allowed to be transmitted on multiple target resources;
wherein the target resource comprises: a carrier or a bandwidth part (BWP).

5. The method according to claim 4, wherein, in a case that the sidelink interface carrier aggregation transmission mode comprises that data corresponding to one first target object are transmitted on only one target resource, the first indication information further comprises: the target resource corresponding to the first target object.

6. The method according to claim 2, wherein, in a case that the second indication information comprises the sidelink interface carrier aggregation transmission mode supported by the terminal capability of the second terminal, the sidelink interface carrier aggregation transmission mode comprises at least one of the following:
data corresponding to one second target object are transmitted on only one target resource; or
data corresponding to one second target object are allowed to be transmitted on multiple target resources;
wherein the second target object comprises: a sidelink interface logical channel, an L2 ID, a QoS profile, or a service identifier; the target resource comprises: a carrier or a bandwidth part.

7. The method according to claim 6, wherein, in a case that the sidelink interface carrier aggregation transmission mode comprises that data corresponding to one second target object are transmitted on only one target resource, the second indication information further comprises: the target resource corresponding to the second target object.

8. The method according to any one of claims 1 to 7, further comprising:
sending third indication information to a network device, the third indication information comprising at least one of the following:
a sidelink interface target L2 ID;
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object; or
terminal capability information of a second terminal.

9. The method according to any one of claims 2 to 7, further comprising:
performing sidelink interface resource selection based on the transmission configuration information or the terminal capability information.

10. The method according to claim 2, wherein, in a case that the target indication information indicates that the first terminal does not use sidelink interface carrier aggregation when performing data transmission corresponding to the first target object, the target indication information is further used for indicating a target resource used by sidelink interface control information and/or sidelink interface data corresponding to the first target object;
wherein the target resource comprises: a carrier or a bandwidth part.

11. An information acquisition method, performed by a network device, comprising:
receiving third indication information sent by a first terminal, wherein the third indication information comprises at least one of the following:
a sidelink interface target Layer 2 address (L2 ID);
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object, wherein the first target object comprises: a Layer 2 address (L2 ID) or a service identifier or a QoS profile; or
terminal capability information of a second terminal, wherein the second terminal is a sidelink peer of the first terminal.

12. The method according to claim 11, wherein whether sidelink interface carrier aggregation is used is indicated by at least one of the following:
1 bit; or
a band combination.

13. The method according to claim 11, wherein the sidelink interface carrier aggregation transmission mode comprises at least one of the following:
data corresponding to one first target object are transmitted on only one target resource; or
data corresponding to one first target object are allowed to be transmitted on multiple target resources;
wherein the target resource comprises: a carrier or a bandwidth part.

14. The method according to any one of claims 11 to 12, further comprising:
selecting a sidelink interface resource for the first terminal based on the third indication information.

15. An information transmission method, performed by a second terminal, comprising:
sending terminal capability information to a first terminal, wherein the terminal capability information carries second indication information;
the second indication information comprises at least one of the following:
whether a terminal capability of the second terminal supports sidelink interface carrier aggregation; or
a sidelink interface carrier aggregation transmission mode supported by the terminal capability of the second terminal;
wherein the second terminal is a sidelink peer of the first terminal.

16. The method according to claim 15, wherein whether sidelink interface carrier aggregation is supported or whether sidelink interface carrier aggregation is used is indicated by at least one of the following:
1 bit; or
a band combination.

17. The method according to claim 15, wherein, in a case that the second indication information comprises the sidelink interface carrier aggregation transmission mode supported by the terminal capability of the second terminal, the sidelink interface carrier aggregation transmission mode comprises at least one of the following:
data corresponding to one second target object are transmitted on only one target resource; or
data corresponding to one second target object are allowed to be transmitted on multiple target resources;
wherein the second target object comprises: a sidelink interface logical channel, an L2 ID, a QoS profile, or a service identifier; the target resource comprises: a carrier or a bandwidth part.

18. The method according to claim 17, wherein, in a case that the sidelink interface carrier aggregation transmission mode comprises that data corresponding to one second target object are transmitted on only one target resource, the second indication information further comprises: the target resource corresponding to the second target object.

19. A terminal, the terminal being a first terminal, comprising a memory, a transceiver, and a processor;
wherein the memory is used for storing a computer program; the transceiver is used for sending and receiving data under the control of the processor; and the processor is used for reading the computer program from the memory and performing the following step:
obtaining target indication information, wherein the target indication information is used for indicating whether to use sidelink interface carrier aggregation and/or for indicating a sidelink interface carrier aggregation transmission mode.

20. The terminal according to claim 19, wherein the processor is used for reading the computer program from the memory and performing the following step:
receiving transmission configuration information from a higher layer of the first terminal, the transmission configuration information carrying first indication information, the first indication information being the target indication information; or
receiving terminal capability information from a second terminal, the terminal capability information carrying second indication information, the second indication information being the target indication information;
wherein the first indication information comprises at least one of the following:
whether the first terminal uses sidelink interface carrier aggregation when performing data transmission corresponding to a first target object; or
a sidelink interface carrier aggregation transmission mode used by the first terminal when performing data transmission corresponding to the first target object;
the second indication information comprises at least one of the following:
whether a terminal capability of a second terminal supports sidelink interface carrier aggregation; or
a sidelink interface carrier aggregation transmission mode supported by the terminal capability of the second terminal;
wherein the second terminal is a sidelink peer of the first terminal, and the first target object comprises: a Layer 2 address (L2 ID) or a service identifier or a QoS profile.

21. The terminal according to claim 20, wherein whether sidelink interface carrier aggregation is supported or whether sidelink interface carrier aggregation is used is indicated by at least one of the following:
1 bit; or
a band combination.

22. The terminal according to claim 20, wherein, in a case that the first indication information comprises the sidelink interface carrier aggregation transmission mode used by the first terminal when performing data transmission corresponding to the first target object, the sidelink interface carrier aggregation transmission mode comprises at least one of the following:
data corresponding to one first target object are transmitted on only one target resource; or
data corresponding to one first target object are allowed to be transmitted on multiple target resources;
wherein the target resource comprises: a carrier or a bandwidth part.

23. The terminal according to claim 22, wherein, in a case that the sidelink interface carrier aggregation transmission mode comprises that data corresponding to one first target object are transmitted on only one target resource, the first indication information further comprises: the target resource corresponding to the first target object.

24. The terminal according to claim 20, wherein, in a case that the second indication information comprises the sidelink interface carrier aggregation transmission mode supported by the terminal capability of the second terminal, the sidelink interface carrier aggregation transmission mode comprises at least one of the following:
data corresponding to one second target object are transmitted on only one target resource; or
data corresponding to one second target object are allowed to be transmitted on multiple target resources;
wherein the second target object comprises: a sidelink interface logical channel, an L2 ID, a QoS profile, or a service identifier; the target resource comprises: a carrier or a bandwidth part.

25. The terminal according to claim 24, wherein, in a case that the sidelink interface carrier aggregation transmission mode comprises that data corresponding to one second target object are transmitted on only one target resource, the second indication information further comprises: the target resource corresponding to the second target object.

26. The terminal according to any one of claims 19 to 25, wherein the processor is used for reading the computer program from the memory and further performing the following step:
sending third indication information to a network device via the transceiver, the third indication information comprising at least one of the following:
a sidelink interface target L2 ID;
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object; or
terminal capability information of a second terminal.

27. The terminal according to any one of claims 20 to 25, wherein the processor is used for reading the computer program from the memory and further performing the following step:
performing sidelink interface resource selection based on the transmission configuration information or the terminal capability information.

28. The terminal according to claim 20, wherein in a case that the target indication information indicates that the first terminal does not use sidelink interface carrier aggregation when performing data transmission corresponding to the first target object, the target indication information is further used for indicating a target resource used by sidelink interface control information and/or sidelink interface data corresponding to the first target object;
wherein the target resource comprises: a carrier or a bandwidth part.

29. A network device, comprising a memory, a transceiver, and a processor;
wherein the memory is used for storing a computer program; the transceiver is used for sending and receiving data under the control of the processor; and the processor is used for reading the computer program from the memory and performing the following step:
receiving, via the transceiver, third indication information sent by a first terminal, the third indication information comprising at least one of the following:
a sidelink interface target Layer 2 address (L2 ID);
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object, wherein the first target object comprises: a Layer 2 address (L2 ID) or a service identifier or a QoS profile; or
terminal capability information of a second terminal, wherein the second terminal is a sidelink peer of the first terminal.

30. The network device according to claim 29, wherein whether sidelink interface carrier aggregation is used is indicated by at least one of the following:
1 bit; or
a band combination.

31. The network device according to claim 29, wherein the sidelink interface carrier aggregation transmission mode comprises at least one of the following:
data corresponding to one first target object are transmitted on only one target resource; or
data corresponding to one first target object are allowed to be transmitted on multiple target resources;
wherein the target resource comprises: a carrier or a bandwidth part.

32. The network device according to any one of claims 29 to 31, wherein the processor is used for reading the computer program from the memory and further performing the following step:
selecting a sidelink interface resource for the first terminal based on the third indication information.

33. A terminal, the terminal being a second terminal, comprising a memory, a transceiver, and a processor;
wherein the memory is used for storing a computer program; the transceiver is used for sending and receiving data under the control of the processor; and the processor is used for reading the computer program from the memory and performing the following step:
sending, via the transceiver, terminal capability information to a first terminal, wherein the terminal capability information carries second indication information;
the second indication information comprises at least one of the following:
whether a terminal capability of the second terminal supports sidelink interface carrier aggregation; or
a sidelink interface carrier aggregation transmission mode supported by the terminal capability of the second terminal;
wherein the second terminal is a sidelink peer of the first terminal.

34. The terminal according to claim 33, wherein whether sidelink interface carrier aggregation is supported or whether sidelink interface carrier aggregation is used is indicated by at least one of the following:
1 bit; or
a band combination.

35. The terminal according to claim 33, wherein, in a case that the second indication information comprises the sidelink interface carrier aggregation transmission mode supported by the terminal capability of the second terminal, the sidelink interface carrier aggregation transmission mode comprises at least one of the following:
data corresponding to one second target object are transmitted on only one target resource; or
data corresponding to one second target object are allowed to be transmitted on multiple target resources;
wherein the second target object comprises: a sidelink interface logical channel, an L2 ID, a QoS profile, or a service identifier; the target resource comprises: a carrier or a bandwidth part.

36. The terminal according to claim 35, wherein, in a case that the sidelink interface carrier aggregation transmission mode comprises that data corresponding to one second target object are transmitted on only one target resource, the second indication information further comprises: the target resource corresponding to the second target object.

37. An information acquisition apparatus, applied to a first terminal, comprising:
an obtaining unit, configured to obtain target indication information, wherein the target indication information is used for indicating whether to use sidelink interface carrier aggregation and/or for indicating a sidelink interface carrier aggregation transmission mode.

38. The apparatus according to claim 37, wherein the obtaining unit is configured to:
receive transmission configuration information from a higher layer of the first terminal, the transmission configuration information carrying first indication information, the first indication information being the target indication information; or
receive terminal capability information from a second terminal, the terminal capability information carrying second indication information, the second indication information being the target indication information;
wherein the first indication information comprises at least one of the following:
whether the first terminal uses sidelink interface carrier aggregation when performing data transmission corresponding to a first target object; or
a sidelink interface carrier aggregation transmission mode used by the first terminal when performing data transmission corresponding to the first target object;
the second indication information comprises at least one of the following:
whether a terminal capability of a second terminal supports sidelink interface carrier aggregation; or
a sidelink interface carrier aggregation transmission mode supported by the terminal capability of the second terminal;
wherein the second terminal is a sidelink peer of the first terminal, and the first target object comprises: a Layer 2 address (L2 ID) or a service identifier or a QoS profile.

39. The apparatus according to claim 38, wherein whether sidelink interface carrier aggregation is supported or whether sidelink interface carrier aggregation is used is indicated by at least one of the following:
1 bit; or
a band combination.

40. The apparatus according to claim 38, wherein, in a case that the first indication information comprises the sidelink interface carrier aggregation transmission mode used by the first terminal when performing data transmission corresponding to the first target object, the sidelink interface carrier aggregation transmission mode comprises at least one of the following:
data corresponding to one first target object are transmitted on only one target resource; or
data corresponding to one first target object are allowed to be transmitted on multiple target resources;
wherein the target resource comprises: a carrier or a bandwidth part.

41. The apparatus according to claim 40, wherein, in a case that the sidelink interface carrier aggregation transmission mode comprises that data corresponding to one first target object are transmitted on only one target resource, the first indication information further comprises: the target resource corresponding to the first target object.

42. The apparatus according to claim 38, wherein, in a case that the second indication information comprises the sidelink interface carrier aggregation transmission mode supported by the terminal capability of the second terminal, the sidelink interface carrier aggregation transmission mode comprises at least one of the following:
data corresponding to one second target object are transmitted on only one target resource; or
data corresponding to one second target object are allowed to be transmitted on multiple target resources;
wherein the second target object comprises: a sidelink interface logical channel, an L2 ID, a QoS profile, or a service identifier; the target resource comprises: a carrier or a bandwidth part.

43. The apparatus according to claim 42, wherein, in a case that the sidelink interface carrier aggregation transmission mode comprises that data corresponding to one second target object are transmitted on only one target resource, the second indication information further comprises: the target resource corresponding to the second target object.

44. The apparatus according to any one of claims 37 to 43, further comprising:
a second sending unit, configured to send third indication information to a network device, the third indication information comprising at least one of the following:
a sidelink interface target L2 ID;
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object; or
terminal capability information of a second terminal.

45. The apparatus according to any one of claims 38 to 43, further comprising:
an execution unit, configured to perform sidelink interface resource selection based on the transmission configuration information or the terminal capability information.

46. The apparatus according to claim 38, wherein in a case that the target indication information indicates that the first terminal does not use sidelink interface carrier aggregation when performing data transmission corresponding to the first target object, the target indication information is further used for indicating a target resource used by sidelink interface control information and/or sidelink interface data corresponding to the first target object;
wherein the target resource comprises: a carrier or a bandwidth part.

47. An information acquisition apparatus, applied to a network device, comprising:
a receiving unit, configured to receive third indication information sent by a first terminal, wherein the third indication information comprises at least one of the following:
a sidelink interface target Layer 2 address (L2 ID);
a sidelink interface carrier aggregation transmission mode of the first terminal;
indication information about whether a sidelink interface of the first terminal uses sidelink interface carrier aggregation;
a sidelink interface carrier aggregation transmission mode of the first terminal that corresponds to a first target object, wherein the first target object comprises: a Layer 2 address (L2 ID) or a service identifier or a QoS profile; or
terminal capability information of a second terminal, wherein the second terminal is a sidelink peer of the first terminal.

48. The apparatus according to claim 47, wherein whether sidelink interface carrier aggregation is used is indicated by at least one of the following:
1 bit; or
a band combination.

49. The apparatus according to claim 47, wherein the sidelink interface carrier aggregation transmission mode comprises at least one of the following:
data corresponding to one first target object are transmitted on only one target resource; or
data corresponding to one first target object are allowed to be transmitted on multiple target resources;
wherein the target resource comprises: a carrier or a bandwidth part.

50. The apparatus according to any one of claims 47 to 48, further comprising:
a selection unit, configured to select a sidelink interface resource for the first terminal according to the third indication information.

51. An information transmission apparatus, applied to a second terminal, comprising:
a first sending unit, configured to send terminal capability information to a first terminal, wherein the terminal capability information carries second indication information;
the second indication information comprises at least one of the following:
whether a terminal capability of the second terminal supports sidelink interface carrier aggregation; or
a sidelink interface carrier aggregation transmission mode supported by the terminal capability of the second terminal;
wherein the second terminal is a sidelink peer of the first terminal.

52. The apparatus according to claim 51, wherein whether sidelink interface carrier aggregation is supported or whether sidelink interface carrier aggregation is used is indicated by at least one of the following:
1 bit; or
a band combination.

53. The apparatus according to claim 51, wherein, in a case that the second indication information comprises the sidelink interface carrier aggregation transmission mode supported by the terminal capability of the second terminal, the sidelink interface carrier aggregation transmission mode comprises at least one of the following:
data corresponding to one second target object are transmitted on only one target resource; or
data corresponding to one second target object are allowed to be transmitted on multiple target resources;
wherein the second target object comprises: a sidelink interface logical channel, an L2 ID, a QoS profile, or a service identifier; the target resource comprises: a carrier or a bandwidth part.

54. The apparatus according to claim 53, wherein, in a case that the sidelink interface carrier aggregation transmission mode comprises that data corresponding to one second target object are transmitted on only one target resource, the second indication information further comprises: the target resource corresponding to the second target object.

55. A processor-readable storage medium storing a computer program, wherein the computer program is used for causing a processor to perform the method according to any one of claims 1 to 18.
